# EUROPÄISCHE PATENTSCHRIFT

(11) **EP 0 909 915 B1**
(45) Veröffentlichungstag und Bekanntmachung des Hinweises auf die Patenterteilung: **24.11.2004**
(21) Anmeldenummer: 98117675.3
(22) Anmeldetag: 17.09.1998
(51) Int. Cl.: F16L 21/02, F16L 17/025, F16L 27/113, F16L 25/00

(54) **Dichtung für Kupplungs- und Verbindungsmittel**
Seal for coupling and connecting means
Joint d'étanchéité pour moyens de raccordement

(30) Priorität: 18.09.1997 IL 12179697
(43) Veröffentlichungstag der Anmeldung: 21.04.1999
(73) Patentinhaber: Krausz Metal Industries, Inc., Tel Aviv 61351 (IL)
(72) Erfinder: Krausz, Eliezer, Tel Aviv (IL); Chiproot, Avi, Tel Aviv (IL)
(74) Vertreter: Prietsch, Reiner, Dipl.-Ing.

(56) Entgegenhaltungen:
- US-A- 3 233 907
- US-A- 3 877 733
- US-A- 4 480 860
- US-A- 5 203 594

## Beschreibung

Die Erfindung betrifft eine Dichtringanordnung gemäß Oberbegriff des Anspruchs 1.

Zahlreiche Verbindungsvorrichtungen für zwei aneinanderstoßende, aus gleichem oder unterschiedlichem Material bestehende Rohre sind bekannt siehe z.B US-A-3 233 907. Das Dichtmittel für solche Verbindungsvorrichtungen ist meist ein Gummiring oder dergleichen.

In der israelischen Patentanmeldung Nr. 114 074 ist eine Verbindungsvorrichtung beschrieben, die der nach der Erfindung ähnelt. Der Offenbarungsgehalt dieser Schrift wird hier durch Bezugnahme in die vorliegende Anmeldung übernommen.

Die Erfahrung hat gezeigt, daß zur Verbindung zweier Rohre mit stark voneinander abweichenden Durchmessern spezielle Verbindungsvorrichtungen erforderlich sind, deren Enden jeweils zur Aufnahme eines Rohrs mit dem entsprechenden Durchmesser ausgelegt sind.

Die Erfindung hat die Aufgabe, eine Dichtung für Kupplungs- und Verbindungsvorrichtungen bereitzustellen, die für zu verbindende Rohre unterschiedlichen oder gleichen Durchmessers verwendet werden können.

Die Aufgabe ist erfindungsgemäß gelöst durch einen Dichtringanordnung gemäß Anspruch 1.

Der Dichtring nach der Erfindung besteht mithin aus zwei Teilen, die gemeinsam und einzeln verwendet werden können. Dies ermöglicht die Verwendung des gleichen Dichtrings für Rohre unterschiedlichen Durchmessers.

Durch Verwendung zweier Größen eines solchen Dichtrings kann eine Verbindungsvorrichtung gegebenen Durchmessers zur Verbindung zweier Rohre unterschiedlichen Durchmessers verwendet werden. Der Unterschied der Durchmesser kann ziemlich groß sein.

Die Dichtung nach der Erfindung ist in einem Ring mit U-förmigem Profil angeordnet, der über einem radial nach außen weisenden Ringflansch eines im wesentlichen zylindrischen Körpers einer Verbindungsvorrichtung angeordnet ist.

Nach der Erfindung wird ein erster Dichtring aus Gummi oder dergleichen bereitgestellt, dessen Querschnitt einen Zwischenraum festlegt, in dem ein zweiter Ring angeordnet ist, der lose mit dem ersten Ring verbunden ist, so daß der zweite Ring entfernbar ist.

In der Zeichnung sind Ausführungsbeispiele nach der Erfindung schematisch vereinfacht dargestellt. Es zeigt:
- Fig. 1: einen Querschnitt eines Dichtprofils;
- Fig. 2: einen Querschnitt einer weiteren Ausführungsform eines Dichtprofils;
- Fig. 3: eine erste Verwendung des Dichtrings in Verbindung mit einer Vorrichtung zur Verbindung von Rohren;
- Fig. 4: eine zweite Verwendung des Dichtrings in Verbindung mit einer Vorrichtung zur Verbindung von Rohren;
- Fig. 5: eine dritte Verwendung des Dichtrings in Verbindung mit einer Vorrichtung zur Verbindung von Rohren; und
- Fig. 6: einen Querschnitt einer weitere Ausführungsform eines Dichtrings nach der Erfindung.

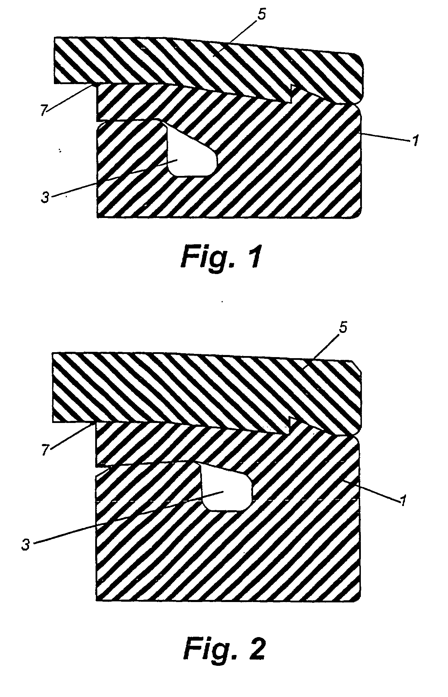

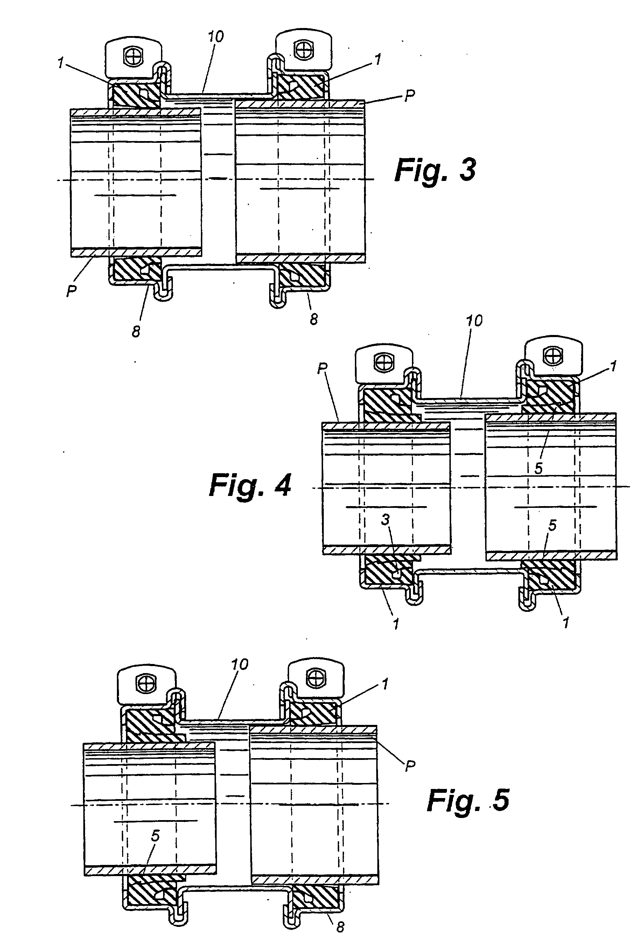

Die Figuren 1 und 2 zeigen jeweils einen aus Kunststoff oder dergleichen bestehenden Dichtring, der einen inneren Ring 5 und einen äußeren Ring 1 aufweist. Der vorzugsweise einen Hohlraum 3 aufweisende äußere Ring 1 ist entlang der Linie 7 mit der Außenseite des inneren Rings 5 verbunden.

Die beiden Ringe 1 und Ring 5 sind voneinander trennbar. Zur Trennung wird der innere Ring 5 aus dem Innenraum des äußeren Rings 1 gezogen. Die Trennlinie verläuft entlang der dünnen Verbindungslinie 7.

Der Innendurchmesser des Dichtrings ist also variabel. So kann der gleiche Dichtring sowohl für Rohre kleineren Durchmessers, dann mit eingesetztem innnerem Ring 5, als auch für Rohre größeren Durchmessers, dann ohne inneren Ring 5, verwendet werden, und zwar jeweils mit hoher Dichtigkeit.

Die Figuren 3, 4 und 5 zeigen Verwendungen des Dichtrings in Verbindung mit Rohren unterschiedlichen Durchmessers.

Bei Verwendung nach Fig. 3 werden nur äußere Ringe 1 eingesetzt, obwohl die Rohre P unterschiedliche Durchmesser aufweisen. Allerdings ist der Durchmesserunterschied der zu verbindenden Rohre relativ gering. Die Dichtringe 1 sind jeweils von einem Ring 8 umgeben, der Teil eines Verbindungskörpers 10 ist.

Bei Verwendung nach Fig. 4 werden aus dem inneren Ring 5 und dem äußeren Ring 1 zusammengesetzte Dichtringe eingesetzt.

Nach Fig. 5 wird für ein Rohr P, d.h. das an der rechten Seite des Verbindungskörpers 10 mündende Rohr, nur der äußere Ring 1 der Dichtung verwendet, wogegen für das an der linken Seite mündende Rohr P' ein Dichtring verwendet wird, der sowohl den inneren Ring 5 als auch den äußeren Ring 1 aufweist.

In den Hohlraum 3 kann in den Leitungen strömendes Fluid eindringen, so daß, wenn in den Leitungen unter Druck stehendes Fluid fließt, mittels des Fluids in dem Hohlraum 3 ein Druck aufgebaut wird, der bewirkt, daß sich das Dichtvermögen der Dichtung erhöht.

Wie sich aus der vorstehenden Offenbarung zwanglos ergibt, kann mithin die gleiche Vorrichtung 10 zur Verbindung von Rohren unterschiedlichen Durchmessers verwendet werden.

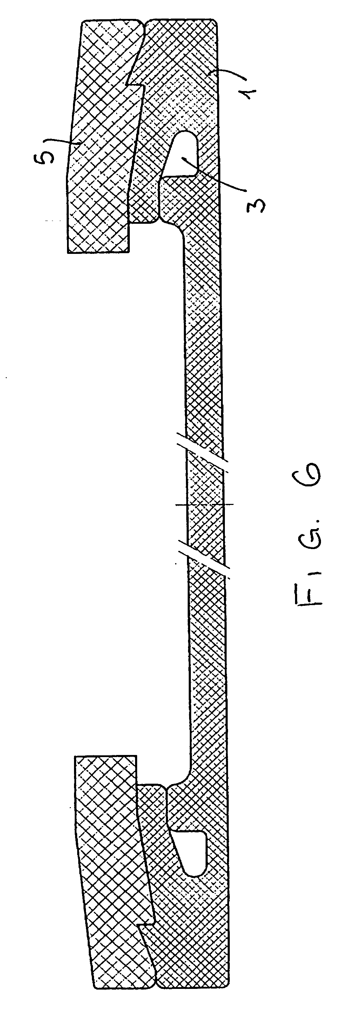

Fig. 6 zeigt eine Doppeldichtung. Diese Dichtung hat zwei Seiten, die in Verbindung mit einer zweiseitigen Verbindungsvorrichtung verwendet werden.

## Patentansprüche

1. Dichtringanordnung mit zwei Ringen (1), (5) aus Gummi oder dergleichen, nämlich einem äußeren Ring (1), der einen inneren Ring (5) umgibt, für eine Vorrichtung zum Verbinden von Rohren, **dadurch gekennzeichnet, dass** der äußere Ring (1) vollständig auf dem inneren Ring (5) sitzt und einen Hohlraum (3) aufweist, und dass der innere Ring (5) mit dem äußeren Ring (1) trennbar verbunden ist.

2. Dichringanordnung nach Anspruch 1, **dadurch gekennzeichnet, dass** der äußere Ring (1) einstückig, jedoch trennbar mit dem inneren Ring (5) verbunden ist.

3. Dichtringanordnung nach Anspruch 1 oder 2, angeordnet in einer Verbindungsvorrichtung, die einen Ring (10) mit etwa U-förmigem Profil aufweist, der die Dichtringanordnung aufnimmt.

## Claims

1. A sealing ring arrangement with two rings (1), (5) made of rubber or the like, namely an outer ring (1) which encloses an inner ring (5) for an apparatus for joining pipes, **characterized in that** the outer ring (1) sits completely on the inner ring (5) and has a cavity (3) and that the inner ring (5) is joined to the outer ring (1) in a separable fashion.

2. A sealing ring arrangement according to claim 1, **characterized in that** the outer ring (1) is integrally, but separably, joined with the inner ring (5).

3. A sealing ring arrangement according to claim 1 or 2, arranged in a joining apparatus which comprises a ring (10) with an approximately U-shaped profile which receives the sealing ring arrangement.

## Revendications

1. Montage de bagues d'étanchéité avec deux bagues (1), (5) en caoutchouc ou similaire, notamment une bague externe (1) entourant une bague interne (5), pour un dispositif de liaison de canalisations, **caractérisé en ce que** la bague externe (1) repose entièrement sur la bague interne (5) et comporte une cavité (3) et que la bague interne (5) est reliée de façon amovible à la bague externe (1).

2. Montage de bagues d'étanchéité selon la revendication 1, **caractérisé en ce que** la bague externe (1) est reliée de façon amovible à la bague interne (5) de manière à ne former toutefois qu'une seule et même pièce.

3. Montage de bagues d'étanchéité selon la revendication 1 ou 2 disposé dans un dispositif de liaison comportant un anneau (10) en forme approximative de profil U qui reçoit le montage de bagues d'étanchéité.
